# EUROPÄISCHE PATENTSCHRIFT

(11) **EP 1 532 011 B1**
(45) Veröffentlichungstag und Bekanntmachung des Hinweises auf die Patenterteilung: **18.07.2007**
(21) Anmeldenummer: 03792297.8
(22) Anmeldetag: 12.08.2003
(51) Int. Cl.: B60H 1/00

(54) **STEUEREINRICHTUNG MIT ROLLBANDKASSETTE**
CONTROL DEVICE COMPRISING A ROLLER BAND CASSETTE
DISPOSITIF DE COMMANDE MUNI D'UN COFFRET A BANDE ENROULEE

(30) Priorität: 16.08.2002 DE 10238430
(43) Veröffentlichungstag der Anmeldung: 25.05.2005
(73) Patentinhaber: Behr GmbH & Co. KG, 70469 Stuttgart (DE)
(72) Erfinder: KLINGLER, Dietrich, 73540 Heubach (DE); SCHWAHN, Werner, 71701 Schwieberdingen (DE)
(86) Internationale Anmeldenummer: PCT/EP2003/008915
(87) Internationale Veröffentlichungsnummer: WO 2004/018244

(56) Entgegenhaltungen:
- DE-A- 2 343 074
- DE-A- 19 801 979
- US-A- 5 632 672
- US-A- 5 901 943
- US-A- 5 916 021

## Beschreibung

Die Erfindung betrifft eine Steuereinrichtung, insbesondere für eine Heizungs- und/oder Klimaanlage, zum Steuern von Luftströmen in Kraftfahrzeugen nach dem Oberbegriff des Patentanspruches 1.

Die DE 44 42 000 A1 betrifft eine solche Steuereinrichtung für eine Heizungs- und/oder Klimaanlage, die als Jalousiekassette ausgeführt ist und in Luftkanäle einer Heizungs- und/oder Klimaanlage für ein Kraftfahrzeug eingesetzt wird. Die Steuereinrichtung regelt die Menge und auch die Richtung des durchtretenden. Luftstromes. Die Steuereinrichtung wird durch einen Rahmen gebildet, in dem eine Vielzahl von schwenkbaren Lamellen angeordnet ist, die eine Klappenjalousie bilden. Durch Verschwenken der Lamellen in einem Bereich von 0 bis 90° kann der Durchtrittsquerschnitt für den Luftstrom vollständig geschlossen, vollständig geöffnet oder teilweise frei gegeben werden, wobei auch die Richtung des Luftstromes durch die Stellung der Lamellen beeinflusst wird. Diese Jalousiekassette weist eine Vielzahl von Teilen auf, bedingt durch die Lamellenbauart und die damit verbundene Ansteuerung. Bei engen Luftspalten können Pfeifgeräusche auftreten und möglicherweise auch Klappergeräusche. Darüber hinaus weist eine solche Jalousiekassette einen relativ hohen Luftwiderstand, d. h. Druckabfall auf.

In der DE 35 14 358 A1 wurde bereits vorgeschlagen, herkömmliche Klappen zu Steuerung der Luftströme in einer Heizungs- und/oder Klimaanlage durch eine so genannte Rolljalousie zu ersetzen. Letztere besteht aus einem Rollband, welches teilweise mit Ausschnitten versehen ist und die Durchtrittsöffnungen von Luftströmungskartälen schließt oder teilweise bzw. vollständig frei gibt. Das Rollband wird über einzelne Walzen geführt, auf- und abgewickelt sowie mittels eines Stellmotors über eine Antriebswalze in Schließ-, Öffnungs- oder Zwischenstellung gebracht.

Eine Weiterentwicklung einer solchen Rolljalousie wurde durch die EP 0 705 725 A1 bekannt. Dort wird ein filmartiges Rollband, welches, über seine Länge verteilt, eine Vielzahl von unterschiedlichen Ausschnitten für den Durchtritt eines Luftstromes aufweist, an den Austrittsöffnungen des Klimaanlagengehäuses vorbei geführt und kontrolliert somit den Austrittsquerschnitt für die Luft. In einer weiteren Anwendung ist ein solches Rollband unmittelbar vor dem Heizkörper angeordnet und steuert die durch den Heizkörper hindurchtretende Luftmenge sowie den den Heizkörper umströmenden Bypassstrom. Diese Art von Rolljalousien ist jeweils an die speziellen Einbauverhältnisse und Konfigurationen einer speziellen Heizungs- und/oder Klimaanlage angepasst.

US 5 916 021 zeigt eine Steuereinrichtung gemäß dem Oberbegriff des Auspruchs 1.

Es ist Aufgabe der vorliegenden Erfindung eine Steuereinrichtung, insbesondere für eine Heizungs- und/oder Klimaanlage, dahingehend zu verbessern, dass die Steuereinrichtung einen minimalen Bauraum aufweist, universell verwendbar und einfach in die Heizungs- und/oder Klimaanlage einbaubar ist, wobei die Steuereinrichtung einfach zusammensetzbar ist.

Diese Aufgabe wird erfindungsgemäß durch die Merkmale des Anspruchs 1 gelöst. Die abhängigen Ansprüche betreffen vorteilhafte Aus- und Weiterbildungen der Erfindung.

Der Hauptgedanke der Erfindung besteht darin, den Rahmen einer Steuereinrichtung zum Steuern von Luftströmen in Kraftfahrzeugen, so auszuführen, dass die Rolljalousie einfach in den Rahmen eingesetzt und entnommen werden kann. Dies wird durch zwei längsseitig offene Hohlkörpern erreicht, die die Antriebswelle oder die Umlenkwelle für die Rolljalousie in sich aufnehmen; wobei die Hohlkörper jeweils einen schwenkbaren Deckel zum Öffnen des jeweiligen Hohlkörpers aufweisen. Das Rollband der Rolljalousie ist dabei bevorzugt derart ausgebildet, dass es in Art eines Endlosbandes beide Wellen in sich aufnimmt. Dabei kann insbesondere an der Antriebswelle eine feste Verbindung zwischen Rollband und Welle bestehen, beispielsweise indem das Rollband bereichsweise an der Welle fest angebracht, insbesondere in Längsrichtung der Welle verlaufend eingeklemmt ist.

Erfindungsgemäß ist der Schwenkbare Weckel mittels eines beweglichen Elements mit dem Hohlkörper verbunden. Bei einer vorteilhaften Ausfürungsform ist der schwenkbare Deckel mittels eines Scharniers mit dem Hohlkörper verbunden, wobei das Scharnier beispielsweise als Filmscharnier ausgeführt ist.

Erfindungsgemäß sind zumindest Teile des Hohlkörpers an das Gehäuse angeformt, wobei die mindestens eine Durchtrittsöffnung zwischen den beiden Hohlkörpern angeordnet ist.

Bei einer weiteren Ausführungsform ist die Rolljalousie fest mit der Antriebswelle verbunden, wobei die Antriebswelle beispielsweise mindestens zwei Teile umfasst, zwischen denen die Rolljalousie eingeklemmt ist, wobei die beiden Teile mittels einer Verclipsung oder einer Arretierung miteinander verbunden sind.

Bei einer besonders vorteilhaften Ausführungsform der Erfindung ist die Rolljalousie als endloses Rollband mit Aussparungen zur Freigabe der mindestens einen Durchtrittsöffnung ausgebildet.

Bei einer bevorzugten Ausführungsform wird das Rollband zweilagig an der mindestens einen Durchtrittsöffnung vorbeigeführt, wobei die Aussparungen auf dem Rollband so verteilt sind, dass bei einer geschlossenen Durchtrittsöffnung jeweils eine Lage des Rollbandes etwa die Hälfte der Druchtrittsöffnung verdeckt, wobei beim Öffnen der Durchtrittsöffnung sich die beiden Lagen des Rollbandes in entgegengesetzter Richtung bewegen und die Durchtrittsöffnung von der Mitte nach Außen freigeben. Durch die Zweilagigkeit wird in vorteilhafter Weise ein Flattern des Bandes vermieden und dadurch die Geräuschentwicklung reduziert. Durch die beschriebene Art der Freigabe der Durchtrittsöffnung wird nur der halbe Betätigungsweg zum Öffnen oder Schließen der Durchtrittsöffnung benötigt. -

Zur besseren Führung und Betätigung des Rollbandes ist die mindestens eine Durchtrittsöffnung durch Gitterstäbe im mehrere Fenster unterteilt.

Die Antriebswelle wird mittels eines Stellmotors, der beispielsweise direkt am Rahmen angeflanscht ist oder über einen Bowdenzug oder eine biegsame Welle angetrieben.

Bei einer anderen Ausführungsform ist der Stellmotor in die als Hohlwelle ausgebildete Antriebswelle integriert.

Bei einer besonders vorteilhaften Ausführungsform der Erfindung werden mit einem Rahmen zwei Luftströmungen verändert, wobei der Rahmen für diesen Zweck zwei Durchtrittsöffnungen umfasst, deren Durchtrittsquerschnitte verändert werden, wobei in einer ersten Ausgangsstellung eine erste Durchtrittsöffnung vollständig geöffnet und eine zweite Durchtrittsöffnung vollständig geschlossen ist, wobei in einer zweiten Ausgangsstellung die erste Durchtrittsöffnung vollständig geschlossen ist und die zweite Durchtrittsöffnung vollständig geöffnet ist, und wobei zwischen der ersten und der zweiten Ausgangsstellung beliebige Durchtrittsquerschnitte für die jeweilige Durchtrittsöffnung einstellbar sind. Die Durchtrittsöffnungen können dabei abhängig von der Einbausituation auch in vorgebbaren Winkeln, beispielsweise bis 90°, zueinander angeordnet sein.

Bei einer Ausführungsform mit zwei gleich großen Durchtrittsöffnungen, ergibt die Summe der Durchtrittsquerschnitte der beiden Durchtrittsöffnungen immer den maximal möglichen Durchtrittsquerschnitt einer Durchtrittsöffnung.

Zur besseren Führung des Rollbandes bei mehreren Durchtrittsöffnungen umfasst der Rahmen zwischen zwei Durchtrittsöffnungen mindestens eine Abstützeinrichtung, wobei die Abstützeinrichtung beispielsweise mit den beiden Seitenteilen, vorzugsweise lösbar, verbunden ist und dadurch eine Leckage von einer Durchtrittsöffnung zur anderen Durchtrittsöffnung verhindert.

Eine besonders einfache Montage auf Grund von einer geringen Anzahl von Einzelteilen und eines einfachen Einlegens der Antriebs- und/oder Umlenkwelle ergibt sich, wenn der Hohlkörper derart ausgebildet ist, dass mindestens eine Lagerstelle in Seitenwänden des Hohlkörpers vorgesehen ist, in welcher die Antriebswelle oder die Umlenkwelle gelagert ist, wobei insbesondere in jedem Hohlkörper sowohl im Unterteil als auch im Oberteil jeweils ein halbes Lager in Seitenwänden ausgebildet ist. Es ist aber auch möglich, die Lagerstelle vollständig im Oberteil oder im Unterteil auszuführen.

Die bisher beschriebene Steuereinrichtung wird vorzugsweise in Heizungs- oder Klimaanlagen für Kraftfahrzeug eingesetzt.

Ausführungsbeispiele der Erfindung sind in der Zeichnung dargestellt und werden im Folgenden näher beschrieben.

Es zeigen:
- Fig. 1 a-d: eine Steuereinrichtung mit Rolljalousie zum Verändern von einem Durchtrittsquerschnitt;
- Fig. 2a-d: eine Steuereinrichtung mit Rolljalousie zum Verändern von zwei Durchtrittsquerschnitten;
- Fig. 3: Schnittdarstellung der Steuereinrichtung gemäß Fig. 1b;
- Fig. 4: Schnittdarstellung der Steuereinrichtung gemäß Fig. 2b;
- Fig. 5a-b: Schnittdarstellung des Bereichs der Umlenkwelle gemäß Fig. 1 b bzw. 2b;
- Fig. 6a-b: Schnittdarstellung der Antriebswelle mit Rollband;
- Fig. 7a-c: in schematischer Darstellung verschiedene Rollbänder;
- Fig. 8: einen vergrößerten Ausschnitt der Antriebswelle mit Rollband;
- Fig. 9a-c: Schnittdarstellung der Steuereinrichtung nach Fig. 1;
- Fig. 10a-c: Steuereinrichtung nach Fig. 2;
- Fig. 11: eine alternative Ausführungsform der Steuereinrichtung zum Steuern von zwei Luftströmen;
- Fig. 12a-d: eine alternative Ausführungsform der Steuereinrichtung;
- Fig. 13a-c: eine weitere Ausführungsform; und
- Fig. 14a-c: Schnitte durch verschiedene Rollbänder.

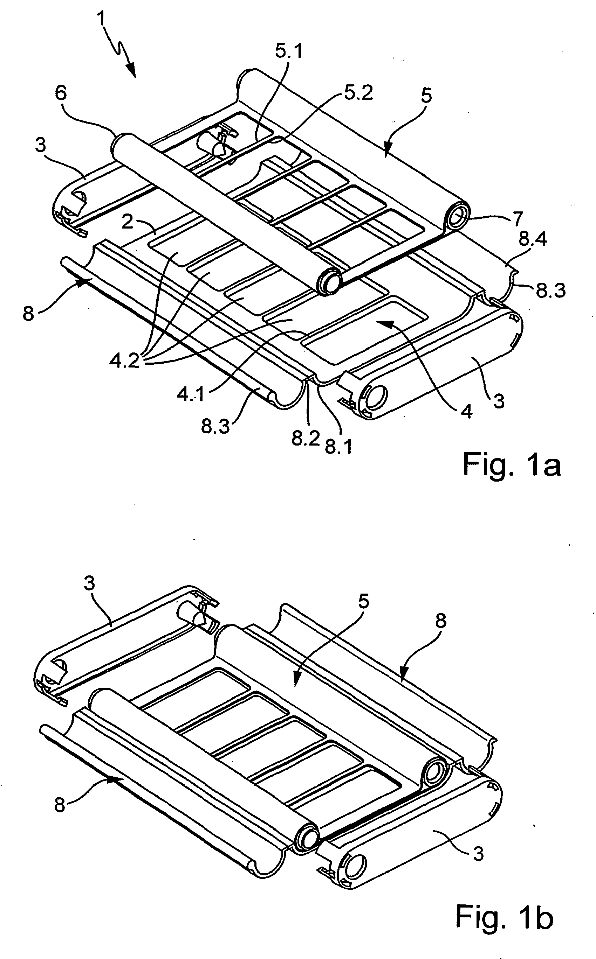

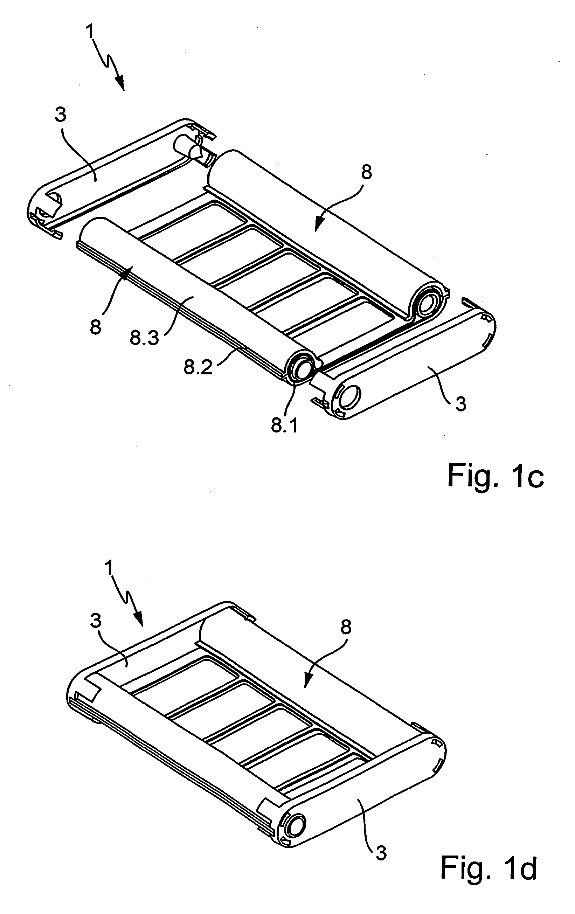

Fig. 1 zeigt eine Steuereinrichtung 1, mit einem Rahmen, welcher ein Gehäuse 2 und zwei Seitenteile 3 umfaßt. Das Gehäuse umschließt eine Durchtrittsöffnung 4, die durch Gitterstäbe 4.1 in mehrere Fenster 4.2 unterteilt ist. Diese parallel angeordneten Gitterstäbe 14 dienen der Festigkeit des Gehäuses 3 und auch der Ausrichtung der durchtretenden Luftströmung. An den Längsseiten ist im dargestellten Ausführungsbeispiel an das Gehäuse 2 jeweils ein Unterteil 8.1 eines an einer Längsseite offenen Hohlkörpers 8 angeformt, wobei im dargestellten Ausführungsbeispiel der Hohlkörper als Hohlzylinder ausgeführt ist, und wobei die beiden Hohlkörper 8 entweder eine Antriebswelle 6 oder eine Umlenkwelle 7 aufnehmen. Über ein bewegliches Element 8.2 ist ein Oberteil 8.3 schwenkbar mit dem Unterteil 8.1 verbunden. Bei geöffnetem Hohlkörper kann die Rollbandbaugruppe bestehend aus einem Rollband 5, der Antriebswelle 6 und der Umlenkwelle 7 einfach von oben in das Gehäuse 2 eingelegt werden. Danach wird das Oberteil 8.3 auf das Unterteil geschwenkt und das Gehäuse 3 an seinen Querseiten durch die Seitenteile 3 geschlossen.

Die Steuermittel zum Verändern des Durchtrittsquerschnittes der Durchtrittsöffnung umfassen das endlose Rollband 5, die Antriebswelle 6 und die Umlenkwelle 7. Die Antriebswelle 6 und die Umlenkwelle 7 sind mit nicht näher dargestellten stirnseitigen Zapfen- oder Hohlzapfen in entsprechenden Lagerstellen der Seitenteile 8, 9 drehbar gelagert. Über den Umfang der Antriebswelle 6 und der Umlenkwelle 7 ist das Rollband 2 geführt. Das Rollband 2 weist Ausschnitte 5.1 auf, die hinsichtlich ihrer Querschnitte dem der Fensters 4.2 im Gehäuse 2 entsprechen. Die Ausschnitte 5.1 sind durch einzelne schmale Streifen 5.2 unterteilt, damit in dem Rollband 2 die erforderliche Zugspannung über die gesamte Breite aufrechterhalten und eine dichte Anlage des Rollbandes 2 an die beiden Wellen 6 und 7 gewährleistet ist.

Fig. 1 a bis 1d zeigen die Einzelteile der Steuereinrichtung 1 und den Ablauf beim Zusammenbau der Steuereinrichtung 1. Fig. 1a zeigt das Gehäuse 3 mit aufgeschwenkten Oberteil 8.3 des Hohlkörpers 8.

Fig. 1b zeigt das Gehäuse mit eingelegter Rollbandbaugruppe, wobei in die beiden Unterteile 8.1 der Hohlkörper die Antriebswelle bzw. die Umlenkwelle eingelegt ist.

Fig. 1c zeigt das Gehäuse mit geschlossenem Hohlkörper, d. h. das Oberteil 8.3 wurde über das bewegliche Element, welches im dargestellten Ausführungsbeispiel als Filmschanier ausgeführt ist, auf das Unterteil geschwenkt, wodurch der Hohlkörper 8 bis auf einen Längsschlitz 8.4, durch den das Rollband 5 geführt ist, geschlossen ist.

Fig. 1d zeigt die Steuereinrichtung mit durch die Seitenteile 3 geschlossenem Gehäuse 2.

Die beschriebene Steuereinrichtung wird in eine hier nicht dargestellte Heizungs- und/oder Klimaanlage für ein Kraftfahrzeug eingesetzt, wobei die Steuereinrichtung hinsichtlich ihrer Außenabmessungen an den jeweiligen Luftströmungskanal angepasst ist, so dass der gesamte Luftströmungsquerschnitt durch die Kassette kontrolliert werden kann. Im dargestellten Ausführungsbeispiel ist der Durchtrittsquerschnitt einer Durchtrittsöffnung 4 mit fünf Fenstern 4.2 steuerbar.

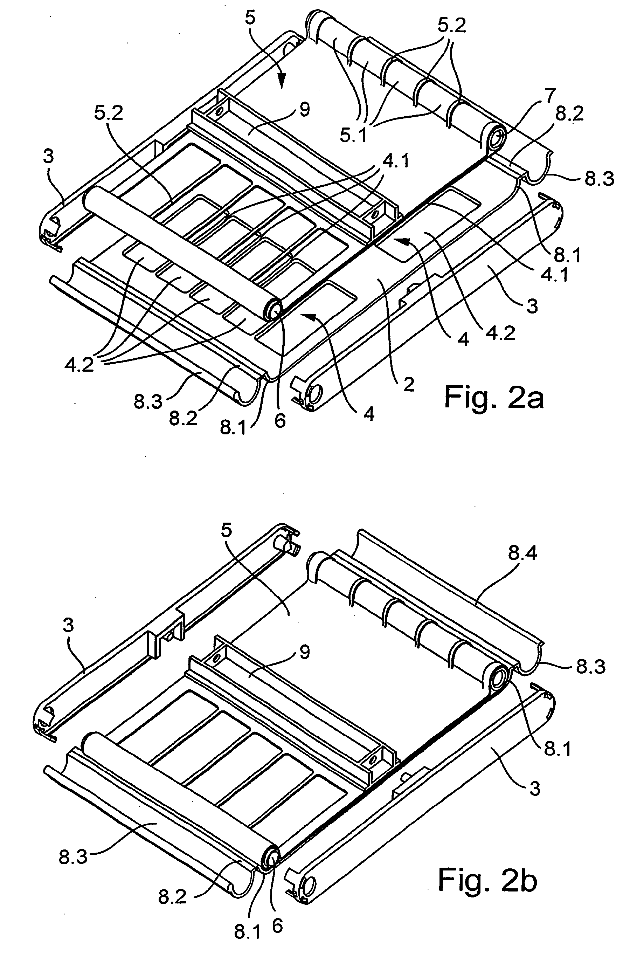

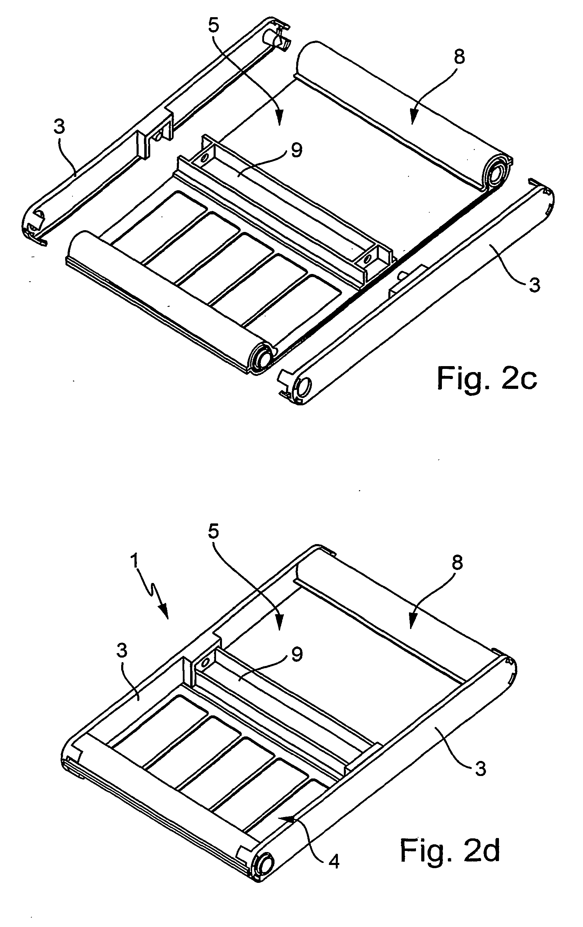

Fig. 2 zeigt eine Steuereinrichtung 1 mit einem Rahmen, welcher ein Gehäuse 2 und zwei Seitenteile 3 umfaßt. Im Gegensatz zum Ausführungsbeispiel in Fig. 1 umschließt das Gehäuse hier zwei Durchtrittsöffnungen 4, die durch Gitterstäbe 4.1 in mehrere Fenster 4.2 unterteilt sind. Wie aus der Fig. 2 ersichtlich ist, umfaßt die Steuereinrichtung analog zur Steuereinrichtung nach Fig. 1 ebenfalls ein Gehäuse 2 mit angeformten Hohlkörpern 8 zur Aufnahme der Antriebswelle 6 bzw. der Umlenkwelle 7, zwei Seitenteile 3 und ein Rollband 5. Zusätzlich ist zwischen den beiden Durchtrittsöffnungen 4 eine Abstützeinrichtung 9 zur zusätzlichen Führung des Rollbandes 5 angeordnet. Im dargestellten Ausführungsbeispiel ist der Durchtrittsquerschnitt von zwei Durchtrittsöffnungen 4 steuerbar. Die Darstellung zeigt eine erste Ausgangsposition, bei der die linke Durchtrittsöffnung vollständig geöffnet und die rechte Durchtrittsöffnung vollständig geschlossen ist.

Fig. 2a bis 2d zeigen die Einzelteile der Steuereinrichtung 1 zur Steuerung von zwei Durchtrittsöffnungen und den Ablauf beim Zusammenbau der Steuereinrichtung 1. Fig. 2a zeigt das Gehäuse 3 mit aufgeschwenkten Oberteil 8.3 des Hohlkörpers 8.

Fig. 2b zeigt das Gehäuse mit eingelegter Rollbandbaugruppe (Rollband 5, Antriebswelle 6, Umlenkwelle 7) und zwischen den Durchtrittsöffnungen 4 aufgelegter Abstützeinrichtung 9, wobei in die beiden Unterteile 8.1 der Hohlkörper 8 die Antriebswelle 6 bzw. die Umlenkwelle 7 eingelegt ist.

Fig. 2c zeigt das Gehäuse 2 mit geschlossenem Hohlkörper 8, d. h. das Oberteil 8.3 wurde über das bewegliche Element 8.2, welches im dargestellten Ausführungsbeispiel als Filmschanier ausgeführt ist, auf das Unterteil 8.1 geschwenkt, wodurch der Hohlkörper 8 bis auf einen Längsschlitz 8.4, durch den das Rollband 5 geführt ist geschlossen ist.

Fig. 2d zeigt die Steuereinrichtung mit durch die Seitenteile 3 geschlossenem Gehäuse 2, wobei die Abstützeinrichtung 9 ebenfalls mit den Seitenteilen verbunden, beispielsweise verclipst ist.

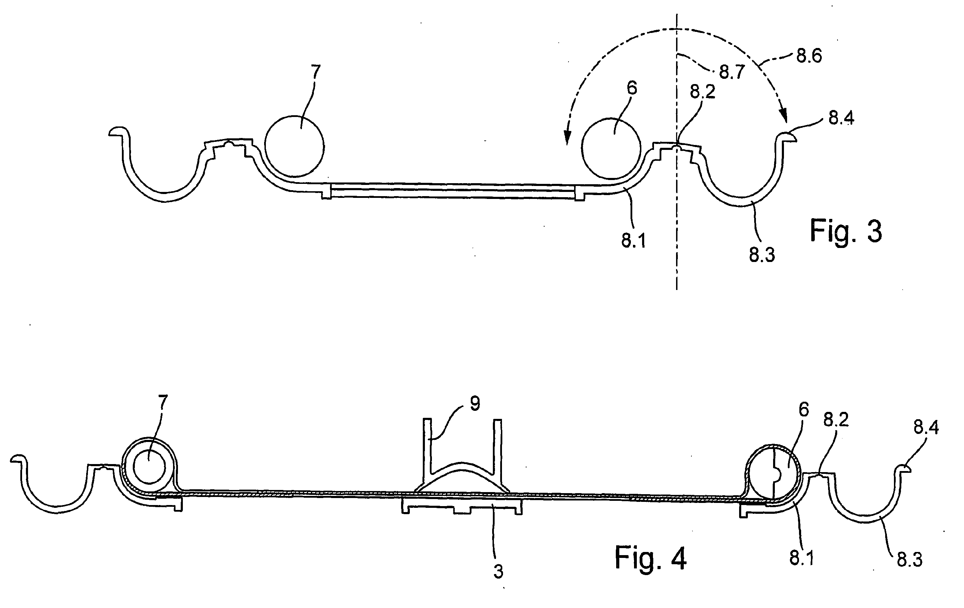

Fig. 3 zeigt eine Schnittdarstellung der Steuereinrichtung 1 gemäß Fig. 1b ohne Rollband 5, zur Darstellung der Schwenkbewegung 8.6 des Oberteils 8.3 des Hohlkörpers 8 um die Schwenkachse 8.7, die etwa mittig durch das bewegbare Element 8.2 verläuft. Wie aus Fig. 3 ersichtlich ist, ist an das offene Ende des Oberteils 8.3 eine Nase 8.4 angeformt, wobei die Nase bei geschlossenem Hohlkörper 8 die Führung des Rollbandes 5 erleichtert.

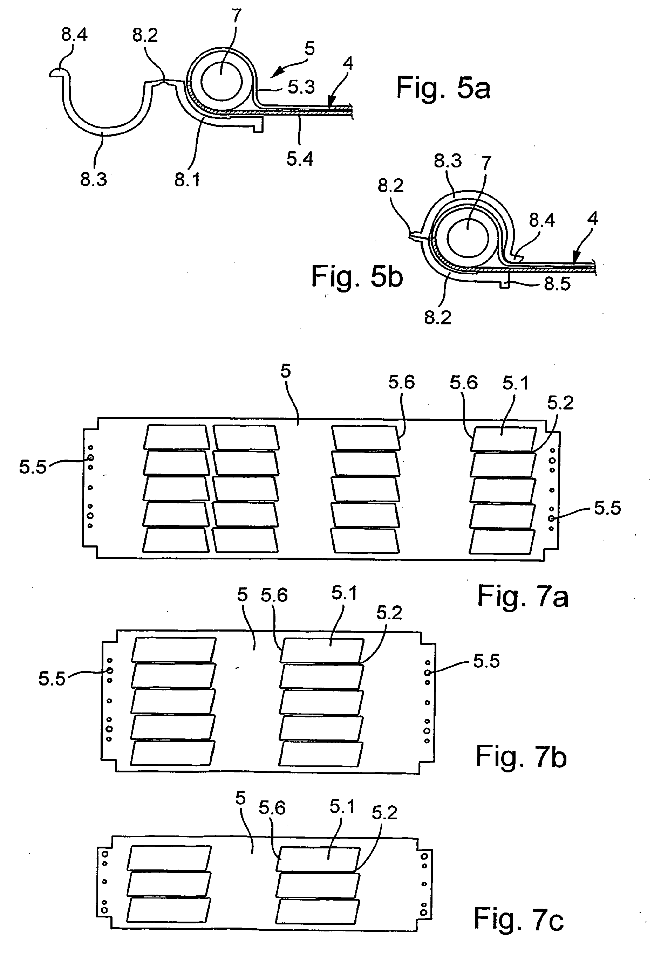

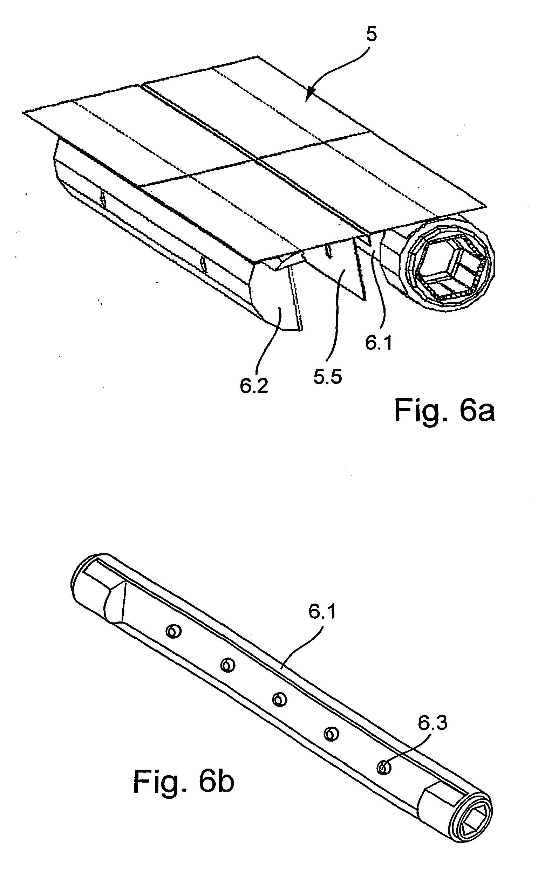

Fig. 4 zeigt eine Schnittdarstellung der Steuereinrichtung 1 gemäß Fig. 2b mit eingelegter Rollbandbaugruppe (Rollband 5, Antriebswelle 6, Umlenkwelle 7) und aufgesetzter Abstützeinrichtung 9.

Fig. 5 zeigt einen Schnitt durch den Bereich der Umlenkwelle 7 gemäß Fig. 1b bzw. 2b. Fig. 5a zeigt den Bereich mit der ins Gehäuse 2 eingelegten Rollbandbaugruppe und mit geöffnetem Hohlkörper. Fig. 5b zeigt den Bereich mit der ins Gehäuse 2 eingelegten Rollbandbaugruppe und mit geschlossenem Hohlkörper 8. Wie aus Fig. 5 ersichtlich ist, wird das Rollband 5 in zwei Lagen. 5.3, 5.4 über die Durchtrittsöffnungen 4 geführt. Die an das Oberteil 8.3 des Hohlkörpers angeformte Nase 8.4 erleichtert die Führung des Rollbandes 5 durch die Längsöffnung 8.5 des Hohlkörpers 8.

Fig. 6 zeigt eine schematische Darstellung der Verbindung des Rollbandes 5 mit der Antriebswelle 6. Wie aus der Fig. 6a ersichtlich ist, umfaßt die Antriebswelle 6 ein Unterteil 6.1 und ein Oberteil 6.2, wobei das Oberteil 6.2 mittels einer Clipsverbindung 6.3 mit dem Unterteil 6.1 verbindbar ist. Zur Verbindung mit der Antriebswelle 6 weist das Rollband an seinen Enden beispielsweise Löcher 5.5 auf, durch die es auf dem Unterteil 6.1 der Antriebswelle 6 fixiert ist. Bei der Verclipsung des Oberteils 6.2 mit dem Unterteil 6.1 wird das Rollband dann geklemmt und dadurch mit der Antriebswelle fest verbunden. Zur Verdeutlichung zeigt Fig. 6b eine Darstellung des Unterteils 6.1 der Antriebswelle 6 mit den entsprechenden Clipsen 6.3 für die Clipsverbindung mit dem Oberteil 6.2.

Fig. 7 zeigt in schematischer Darstellung verschiedene Rollbänder 5. So zeigt Fig. 7a eine Rollband 5 zum Steuern von zwei Durchtrittsöffnungen. Das Rollband 5 weist Ausschnitte 5.1 auf, die hinsichtlich ihrer Querschnitte dem der Fensters 4.2 im Gehäuse 2 entsprechen. Die Ausschnitte 5.1 sind durch einzelne schmale Streifen 5.2 unterteilt. Die Ränder 5.6 der Ausschnitte sind vorzugsweise angeschrägt, um ein problemloses Übereinanderlaufen der beiden Rollbandlagen sicherzustellen. An den beiden Enden weist das Rollband 5 Löcher 5.5 zur Befestigung mit der Antriebswelle 6 auf. Fig. 7b und 7c zeigen Rollbänder zur Steuern von einer Durchtrittsöffnung mit einer unterschiedlichen Anzahl von Fenstern 4.1.

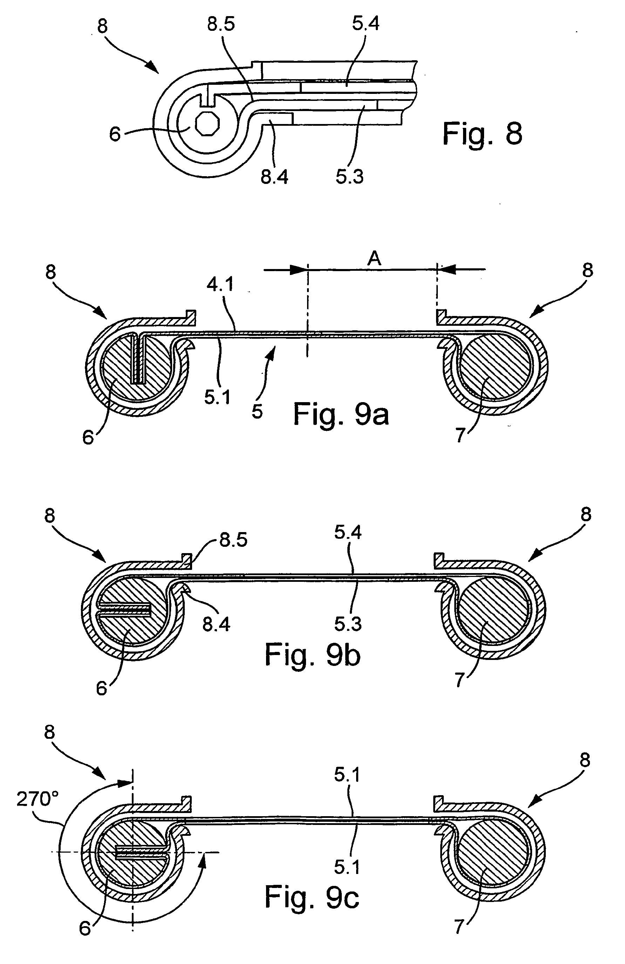

Fig. 8 zeigt einen vergrößerten Ausschnitt des Rollbandes 5 im Bereich der Antriebswelle 6 entsprechend der Darstellung in Fig. 1d bzw. 2d, wobei weitestgehend die gleichen Bezugsziffern verwendet werden. Wie aus der Fig. 8 ersichtlich ist, ist das Rollband 5 an seinen beiden Enden fest mit der Antriebswelle 6 verbunden. Durch die Ausführung des Rollbandes 5 als endloses Band bildet sich eine obere Lage 5:4 und eine unteren Lage 5:3, die sich bei einer Drehung der Antriebswelle 6 gegeneinander bewegen. Durch eine geeignete Anordnung von Ausschnitten ist es daher möglich, die Durchtrittsöffnungen von der Mitte der Durchtrittsöffnung nach Außen zu öffnen bzw. von Außen zur Mitte zu schließen. Die Antriebswelle 6 befindet sich in dem Hohlkörper 8 des Gehäuses 3, wobei der Hohlkörper 8 in Richtung Gehäusemitte einen Schlitz 8.5 aufweist. Das Oberteil 8.3 des Hohlkörpers 8 läuft in eine federnd ausgebildete Nase oder Zunge 8.4 mit einem Radius R aus, oberhalb welcher das Rollband 5 in den Hohlkörper 8 eingeführt und wieder hinausgeführt wird. Das endlose Rollband 5 weist eine obere Lage 5.4 und eine untere Lage 5.3 auf, die sich gegenläufig zueinander bewegen. Das Rollband 5 umschlingt ca. ¾ des Umfanges der Antriebswelle 6 und wird durch die federnde Zunge 8.4 gespannt. Die Zunge 8.4 ersetzt somit eine Spannrolle.

Als weitere Möglichkeiten für die Verbindung des Rollbandes 5 mit der Antriebswelle 6, kann das Rollband 5 auch mit seinen beiden Enden an der Antriebswelle 6 befestigt sein, indem die Rollbandenden in Längsrichtung der Antriebswelle 6 mit dieser verschweißt werden. Der Verstellweg für das Rollband ist bei den beschriebenen Befestigungen mit der Antriebswelle vom Umfang der Antriebswelle bzw. vom Umschlingungswinkel abhängig.

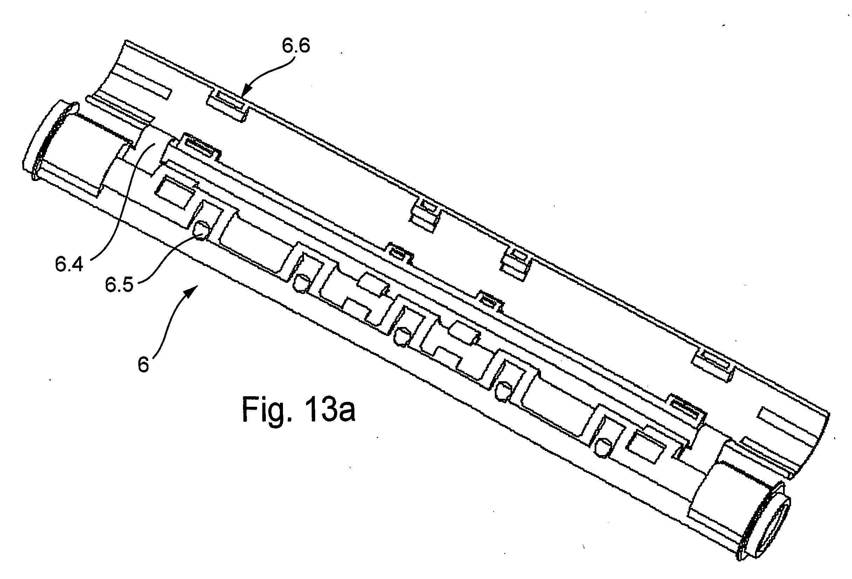

Unter Bezugnahme auf die Fig. 13a bis 13c wird eine weitere Möglichkeit für die Verbindung des Rollbandes 5 mit der Antriebswelle 6 näher erläutert. Dabei ist die Antriebswelle 6 zweiteilig mit einem Unterteil 6.1 und einem Oberteil 6.2 ausgestaltet, wobei die beiden Teile 6.1 und 6.2 über zwei Verbindungsstege 6.4 einstückig miteinander verbunden sind, welche prinzipiell eine Art Scharnierfunktion haben. Die Verbindungsstege 6.4 weisen einen im Wesentlichen rechteckförmigen Querschnitt von 0,5 mm x 2 mm auf und werden durch Spritzkanäle gebildet, wobei etwa mittig eine Knickstelle vorgesehen ist. Dabei sind die Verbindungsstege 6.4 derart ausgebildet, dass sie beim Zusammenklappen der beiden Teile 6.1 und 6.2 im Inneren der Antriebswelle 6 angeordnet sind.

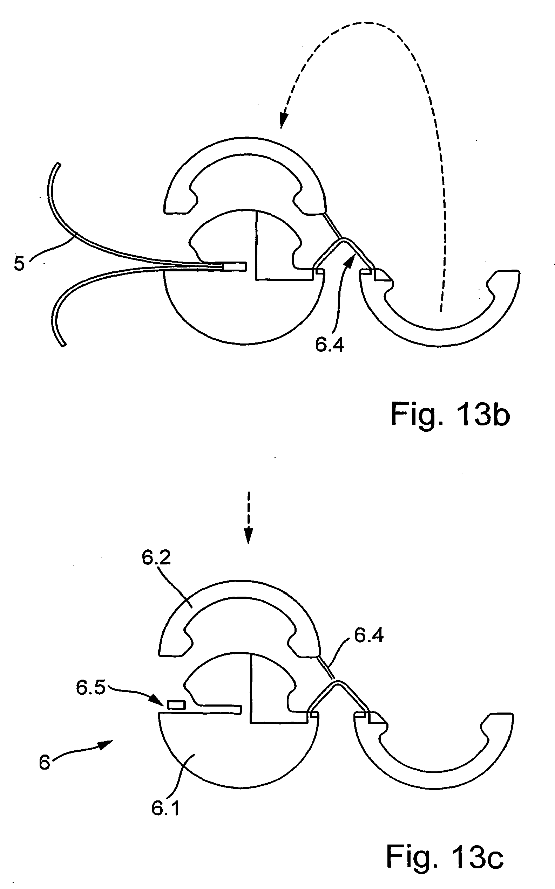

Das Rollband 5 wird mittels Fixierstiften 6.5 im Prinzip auf die o.g. Weise positioniert und mittels Schnapphaken 6.6 (Clipsverbindung) zwischen die beiden Teile 6.1 und 6.2 eingeklemmt. Das Verbinden der beiden Teile 6.1 und 6.2 erfolgt, wie aus Fig. 13b und Fig. 13c ersichtlich (siehe entsprechende Pfeile in den Figuren), mittels einer kombinierten Schwenk-Längs-Bewegung, wobei zum Verclipsen im Wesentlichen eine Längsbewegung erfolgt (vgl. Fig. 13c). In Hinblick auf die Ausgestaltung des Rollbandes 5 sei auf Figuren 7a bis 7c verwiesen, insbesondere in Hinblick auf die Löcher 5.5 an den beiden Rändern desselben.

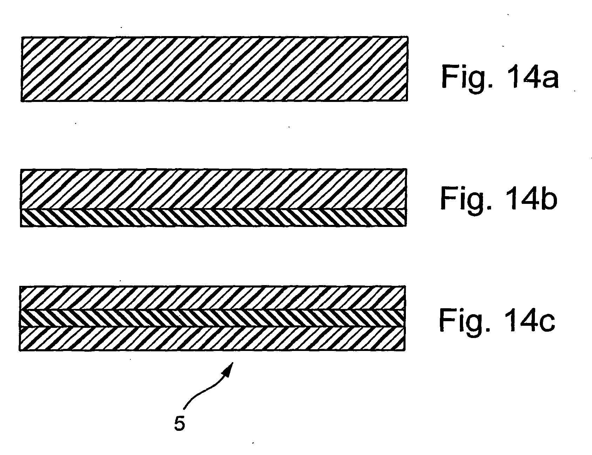

Das Rollband 5 kann eine einschichtige Folie (Monofolie) sein, wie in Fig. 14a dargestellt. Insbesondere in Hinblick auf einen geringen Wärmedurchlass ist eine Aluminium-Folie oder eine mehrlagige Folie mit einer Aluminium-Schicht, wie in Fig. 14b und 14c dargestellt, besonders geeignet. Die Aluminium-Schicht kann beispielsweise aufgedampft oder aufgeklebt, gegebenenfalls auch nur in einem Bereich des Rollbandes, sein. Das Rollband 5 besteht insbesondere aus einem gut gleitfähigen, abriebfesten Material, das temperaturbeständig in einem Bereich von -40°C bis 100°C ist. Ferner sollte das Rollband geräuscharm und wasserabweisend sein. Die Schichtdicken können dabei unterschiedlich sein.

Fig. 9a bis 9c zeigen eine Schnittdarstellung der Steuereinrichtung nach Fig. 1 beim Übergang von einer ersten Ausgangslage (Durchtrittsöffnung geschlossen) in eine zweite Ausgangslage (Durchtrittsöffnung geöffnet) über eine Zwischenlage (Durchtrittsöffnung teilweise geöffnet). Wie aus der Fig. 9 ersichtlich ist, benötigt das Rollband 5 durch die Benutzung der beiden Lagen 5.3, 5.4 des Rollbandes 5 einen kürzeren Verstellweg, um die Durchtrittsöffnung von der geschlossenen Ausgangsstellung in die geöffnete Ausgangsstellung zu bringen, da jede Lage nur um einen Verstellweg, der etwa der halben Breite Ader Durchtrittsöffnung 4 entspricht, bewegt werden muß. Die Antriebswelle muß zu diesem Zweck um einen Winkel von etwa 270° weitergedreht werden. Daraus ergibt sich, dass bei dem dargestellten Ausführungsbeispiel ¾ des Umfangs der Antriebswelle bzw. der Umlenkwelle in etwa der halben Breite A der Durchtrittsöffnung entspricht.

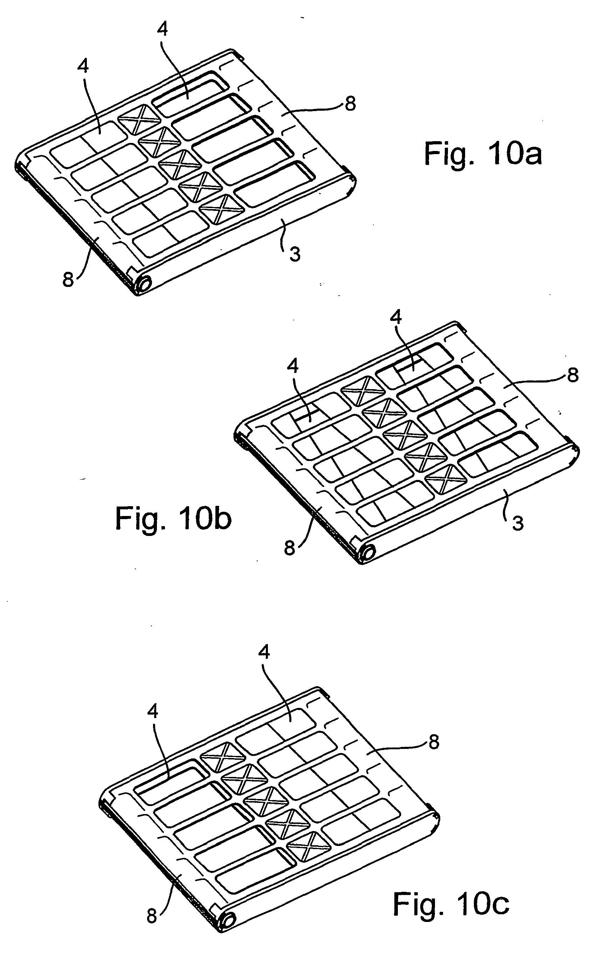

Fig. 10a bis 10c zeigen die Steuereinrichtung nach Fig. 2 beim Übergang von einer ersten Ausgangslage (linke Durchtrittsöffnung geöffnet, rechte Durchtrittsöffnung geschlossen) in eine zweite Ausgangslage (linke Durchtrittsöffnung geschlossen, rechte Durchtrittsöffnung geöffnet) über eine Zwischenlage (beide Durchtrittsöffnung teilweise geöffnet). Wie aus der Fig. 10 ersichtlich ist, werden geöffnete Fenster von Außen zur Mitte geschlossen und geschlossene Fenster von der Mitte nach Außen geöffnet.

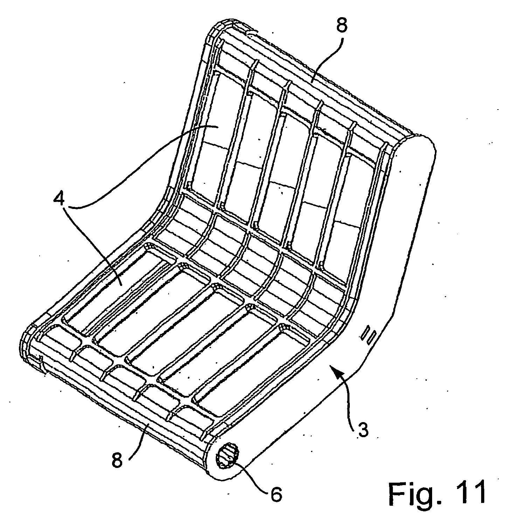

Fig. 11 zeigt eine Ausführungsform der Steuereinrichtung zum Steuern von zwei Luftströmen, die in einem vorgegebenen Winkel zueinander verlaufen.

Zu diesem Zweck sind die beiden Durchtrittsöffnungen in dem vorgegebenen Winkel zueinander angeordnet. Der Winkel wird durch eine entsprechende Ausführung des Bereiches zwischen den beiden Durchtrittsöffnungen erreicht.

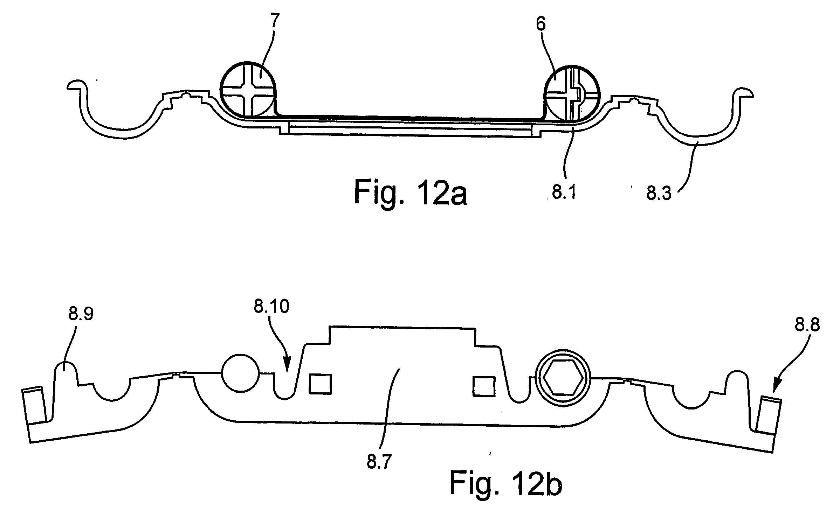

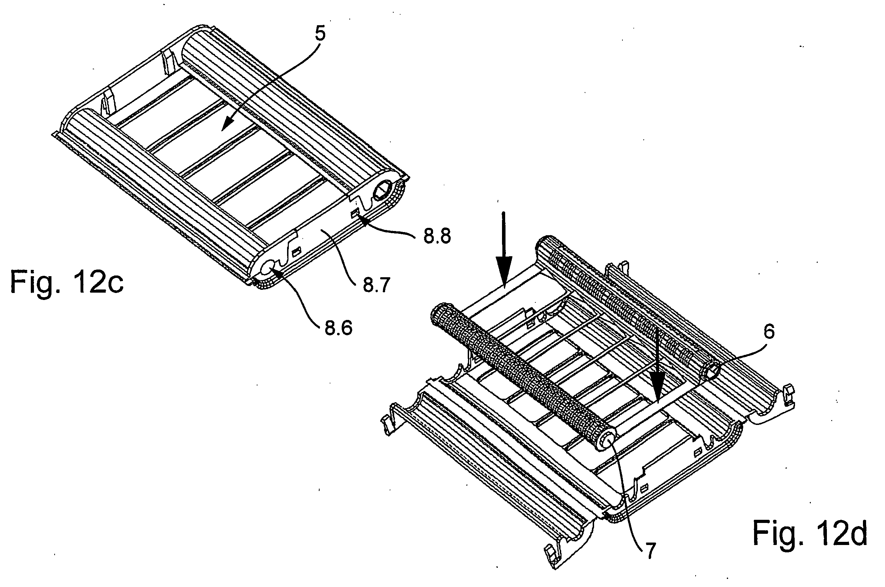

Fig. 12a bis 12d zeigen eine Ausführungsform bei der in die Hohlkörper 8 integriert Lagerstellen 8.6 für die Antriebswelle 6 und Umlenkwelle 7 vorgesehen sind. Hierbei sind im Unterteil 8.1 und Oberteil 8.3 an Seitenwänden 8.7 halbkreisförmig ausgeschnittene oder ausgesparte Bereiche vorgesehen, welche die Lagerstellen 8.6 bilden. Dabei können die Seitenwände 8.7 in diesem Bereich verbreitert ausgebildet sein, so dass eine geringere Materialbelastung erfolgt. Ein aufgestecktes Seitenteil 3, wie bspw. in Fig. 1a dargestellt, kann entfallen, da die beiden Seitenwände 8.7, welche am Gehäuse 2 mit Unter- und Oberteilen 8.1 und 8.3 ausgebildet sind, dessen Funktion übernehmen.

Die beiden Wellen werden mit samt dem Rollband 5 in Richtung der beiden Pfeile von Fig. 12d in die unteren Lagerstellen 8.6 eingelegt. Anschließend werden die Oberteile 8.3 zugeschwenkt, so dass die oberen Lagerstellen 8.6 in Anlage an die Wellen gelangen. Die Verriegelung von Unter- und Oberteil erfolgt mittels einer an den Seitenwänden 8.7 vorgesehenen Clipsverbindung 8.8, wie insbesondere Fig. 12d entnommen werden kann. Zur Positionierung und verbesserten Kraftübertragung in radialer Richtung der Seitenwände 8.7 bezüglich der Lagerstellen 8.6 ist an den Seitenwänden 8.7 des Oberteils 8.3 eine Nase 8.9 vorgesehen, welche beim Schließen in eine entsprechende Aufnahme 8.10 gelangt, welche an den Seitenwänden 8.7 des Unterteils 8.1 ausgebildet ist.

## Patentansprüche

1. Steuereinrichtung (1) zum Steuern von Luftströmen in Kraftfahrzeugen, bestehend aus einem Rahmen mit mindestens einer Durchtrittsöffnung (4) und mindestens einem als Rolljalousie (5) ausgeführten Steuermittel zum Verändern des Durchtrittsquerschnittes für die Luftströmung durch die Durchtrittsöffnung (4), wobei der Rahmen ein Gehäuse (2) mit mindestens zwei längsseitig offenen Hohlkörpern (8) umfasst und die Hohlkörper (8) die Antriebswelle (6) oder die Umlenkwelle (7) für die Rolljalousie (5) in sich aufnehmen, **dadurch gekennzeichnet, dass** zumindest Teile (8.1) der Hohlkörper (8) an das Gehäuse (2) angeformt sind und die Hohlkörper (8) jeweils einen schwenkbaren Deckel (8.3) zum Öffnen des jeweiligen Hohlkörpers (8) aufweisen wobei der schwenkbare Deckel (8.3) mittels eines beweglichen Elements (8.2) mit dem Hohlkörper (8.1) verbunden ist

2. Steuereinrichtung (1) nach Anspruch 1, **dadurch gekennzeichnet, dass** das bewegliche Element (8.2) als Filmscharnier ausgeführt ist.

3. Steuereinrichtung (1) nach einem der vorherigen Ansprüche, **dadurch gekennzeichnet, dass** die mindestens eine Durchtrittsöffnung (4) zwischen den beiden Hohlkörpern (8) angeordnet ist.

4. Steuereinrichtung (1) nach einem der vorherigen Ansprüche, **dadurch gekennzeichnet, dass** die Rolljalousie (5) fest mit der Antriebswelle (6) verbunden ist.

5. Steuereinrichtung (1) nach Anspruch 4, **dadurch gekennzeichnet, dass** die Antriebswelle (6) mindestens zwei Teile (6.1 und 6.2) umfaßt, wobei die Rolljalousie (5) zwischen diesen beiden Teilen (6.1 und 6.2) eingeklemmt oder verschweißt ist.

6. Steuereinrichtung (1) nach Anspruch 5, **dadurch gekennzeichnet, dass** die beiden Teile (6.1 und 6.2) mittels einer Verclipsung oder einer Arretierung miteinander verbunden sind.

7. Steuereinrichtung (1) nach einem der vorherigen Ansprüche, **dadurch gekennzeichnet, dass** das Gehäuse (2) seitlich durch je ein Seitenteil (3) abgeschlossen ist.

8. Steuereinrichtung (1) nach einem der vorherigen Ansprüche, **dadurch gekennzeichnet, dass** die Rolljalousie (5) als endloses Rollband (5) mit Öffnungen oder Ausschnitten (5.1) zur Freigabe des Durchtrittsquerschnittes (4) ausgebildet ist.

9. Steuereinrichtung (1) nach einem der vorherigen Ansprüche, **dadurch gekennzeichnet, dass** Rollband (5) zweilagig an der mindestens einen Durchtrittsöffnung (4) vorbeigeführt wird, wobei Öffnungen oder Aussparungen (5.1) auf dem Rollband (5) so verteilt sind, dass bei einer geschlossenen Durchtrittsöffnung (4) jeweils eine Lage (5.3, 5.4) des Rollbandes 5 etwa die Hälfte der Durchtrittsöffnung (4) verdeckt, wobei beim Öffnen der Durchtrittsöffnung (4) sich die beiden Lagen (5.3, 5.4) des Rollbandes (5) in entgegengesetzter Richtung bewegen und die Durchtrittsöffnung (4) von der Mitte nach Außen freigeben.

10. Steuereinrichtung (1) nach einem der vorherigen Ansprüche, **dadurch gekennzeichnet, dass** Ränder (5.6) von Öffnungen oder Ausschnitten (5.1) des Rollbandes (5) angeschrägt sind.

11. Steuereinrichtung (1) nach einem der vorherigen Ansprüche, **dadurch gekennzeichnet, dass** die mindestens eine Durchtrittsöffnung (4) durch Gitterstäbe (4.2) in mehrere Fenster (4.1) unterteilt ist.

12. Steuereinrichtung (1) nach einem der vorherigen Ansprüche, **dadurch gekennzeichnet, dass** der Durchtrittsquerschnitt von der Mitte einer zugehörigen Durchtrittsöffnung (4) beidseitig nach außen vergrößerbar und beidseitig von außen zur Mitte verkleinerbar ist.

13. Steuereinrichtung (1) nach einem der vorherigen Ansprüche, **dadurch gekennzeichnet, dass** die Antriebswelle (6) über einen Bowdenzug oder eine biegsame Welle angetrieben wird.

14. Steuereinrichtung (1) nach einem der vorherigen Ansprüche, **dadurch gekennzeichnet, dass** an den Rahmen ein Stellmotor zum Verstellen der Antriebswelle (6) angeflanscht ist.

15. Steuereinrichtung (1) nach Anspruch 14, **dadurch gekennzeichnet, dass** der Stellmotor koaxial zur Antriebswelle (6) angeordnet ist.

16. Steuereinrichtung (1) nach Anspruch 14 oder 15, **dadurch gekennzeichnet, dass** der Stellmotor in die als Hohlwelle ausgebildete Antriebswelle (6) integriert ist.

17. Steuereinrichtung (1) nach einem der vorherigen Ansprüche, **dadurch gekennzeichnet, dass** der Rahmen zwei Durchtrittsöffnungen (4) umfasst, wobei durch Verändern des Durchtrittsquerschnittes der jeweiligen Durchtrittsöffnung (4) jeweils eine Luftströmung verändert wird.

18. Steuereinrichtung (1) nach Anspruch 17, **dadurch gekennzeichnet, dass** in einer ersten Ausgangsstellung eine erste Durchtrittsöffnung (4) vollständig geöffnet und eine zweite Durchtrittsöffnung (4) vollständig geschlossen ist.

19. Steuereinrichtung (1) nach Anspruch 17 oder 18, **dadurch gekennzeichnet, dass** in einer zweiten Ausgangsstellung die erste Durchtrittsöffnung (4) vollständig geschlossen ist und die zweite Durchtrittsöffnung (4) vollständig geöffnet ist.

20. Steuereinrichtung (1) nach einem der Ansprüche 17 bis 19, **dadurch gekennzeichnet, dass** zwischen der ersten und der zweiten Ausgangsstellung beliebige Durchtrittsquerschnitte für die jeweilige Durchtrittsöffnung (4) einstellbar sind.

21. Steuereinrichtung (1) nach Anspruch 20, **dadurch gekennzeichnet, dass** bei gleich großen Durchtrittsöffnungen (4) die Summe der Durchtrittsquerschnitte der beiden Durchtrittsöffnungen (4) immer den maximal möglichen Durchtrittsquerschnitt einer Durchtrittsöffnung (4) ergibt.

22. Steuereinrichtung (1) nach einem der vorstehenden Ansprüche, **dadurch gekennzeichnet, dass** der Rahmen zwischen zwei Durchtrittsöffnungen (4) mindestens eine Abstützeinrichtung (9) umfasst

23. Steuereinrichtung (1) nach Anspruch 24, **dadurch gekennzeichnet, dass** die mindestens eine Abstützeinrichtung (9) mit den beiden Seitenteilen (3), vorzugsweise lösbar, verbunden ist.

24. Steuereinrichtung (1) nach einem der vorherigen Ansprüche, **dadurch gekennzeichnet, dass** mindestens eine Lagerstelle (8.6) in Seitenwänden (8.7) des Hohlkörpers (8) vorgesehen ist, in welcher die Antriebswelle (6) oder die Umlenkwelle (7) gelagert ist.

25. Steuereinrichtung (1) nach Anspruch 24, **dadurch gekennzeichnet, dass** die mindestens eine Lagerstelle (8-6) zweiteilig ausgeführt ist und jeweils ein Teil im Oberteil und ein Teil im Unterteil der Seitenwand (8.7) des Hohlkörpers (8) angeordnet ist.

26. Steuereinrichtung (1) nach Anspruch 24, **dadurch gekennzeichnet, dass** die mindestens eine Lagerstelle (8.6) einteilig ausgeführt und vollständig in der Seitenwand (8.7) des Hohlkörpers (8) angeordnet ist.

27. Heizungs- oder Klimaanlage mit einer Steuereinrichtung (1) nach einem der vorherigen Ansprüche 1 bis 26.

## Claims

1. A control device (1) for controlling air flows in motor vehicles consisting of a frame with at least one through opening (4) and at least one control means designed as a roller blind (5) for altering the through cross section for the air flow through the through opening (4), the frame comprising a housing (2) with at least two hollow bodies (8) open along the long sides and the hollow bodies (8) receiving the drive shaft (6) and the guide shaft (7) for the roller blind (5),
**characterised in that**
at least parts (8,1) of the hollow bodies (8) are moulded to the housing (2) and the hollow bodies (8) each have a pivoting cover (8.3) for opening the same, the pivoting cover (8.3) being connected to the hollow body (8.1) by a moving element (8.2).

2. A control device (1) in accordance with claim 1,
**characterised in that**
the moving element (8.2) is designed as a film hinge.

3. A control device (1) in accordance with one of the preceding claims,
**characterised in that**
the at least one through opening (4) is positioned between the two hollow bodies (8).

4. A control device (1) in accordance with one of the preceding claims,
**characterised in that**
the roller blind (5) is permanently connected to the drive shaft (6).

5. A control device (1) in accordance with claim 4,
**characterised in that**
the drive shaft (6) comprises at least two parts (6.1 and 6.2), the roller blind (5) being clamped or welded between these two parts (6.1 and 6.2).

6. A control device (1) in accordance with claim 5,
**characterised in that**
the two parts (6.1 and 6.2) are connected together by means of a clipping or catch mechanism.

7. A control device (1) in accordance with one of the preceding claims,
**characterised in that**
the housing (2) is closed on each side by a lateral part (3).

8. A control device (1) in accordance with one of the preceding claims,
**characterised in that**
the roller blind (5) is designed as an endless roller band (5) with openings or cut-outs (5.1) exposing the through cross section (4).

9. A control device (1) in accordance with one of the preceding claims,
**characterised in that**
the roller band (5) pass over the at least one through opening (4) in two layers, openings or recesses (5.1) being distributed across the roller band (5) in such a manner that when the through opening (4) is closed each layer (5.3, 5.4) of the roller band (5) covers approximately half of the through opening (4) and when the through opening (4) is open the two layers (5.3, 5.4) of the roller band (5) move in opposite directions and expose the through opening (4) from the centre outwards.

10. A control device (1) in accordance with one of the preceding claims,
**characterised in that**
edges (5.6) of openings or cut-outs (5.1) in the roller band (5) are angled.

11. A control device (1) in accordance with one of the preceding claims,
**characterised in that**
the at least one through opening (4) is divided into several windows (4.1) by means of bars (4.2).

12. A control device (1) in accordance with one of the preceding claims,
**characterised in that**
the through cross section can be enlarged on both sides from the centre of a corresponding through opening (4) outwards and reduced on both sides from the outside towards the centre.

13. A control device (1) in accordance with one of the preceding claims,
**characterised in that**
the drive shaft (6) is driven by a Bowden wire or a flexible shaft.

14. A control device (1) in accordance with one of the preceding claims,
**characterised in that**
flanged to the frame is a servomotor for adjusting the drive shaft (6).

15. A control device (1) in accordance with claim 14,
**characterised in that**
the servomotor is positioned coaxially in relation to the drive shaft (6).

16. A control device (1) in accordance with claim 14 or 15,
**characterised in that**
the servomotor is integrated in the drive shaft (6) which is designed as a hollow shaft.

17. A control device (1) in accordance with one of the preceding claims,
**characterised in that**
the frame comprises two through openings (4), altering the through cross section of a through openings (4) also alters an air flow.

18. A control device (1) in accordance with claim 17,
**characterised in that**
in a first initial position a first through opening (4) is fully open and a second through opening (4) is fully closed.

19. A control device (1) in accordance with claim 17 or 18,
**characterised in that**
in a second initial position the first through opening (4) is fully closed and the second through opening (4) is fully open.

20. A control device (1) in accordance with one of claims 17 to 19,
**characterised in that**
between the first and the second initial positions it is possible to set the various through openings to any through cross section.

21. A control device (1) in accordance with claim 20,
**characterised in that**
when the through openings (4) are of the same size the sum of the through cross sections of the two through openings (4) always gives the maximum possible through cross section of a through opening (4).

22. A control device (1) in accordance with one of the preceding claims,
**characterised in that**
the frame has at least one supporting device (9) between two through openings (4).

23. A control device (1) in accordance with claim 22,
**characterised in that**
the at least one supporting device (9) is connected to both lateral parts (3), preferably in such a manner that it can be detached.

24. A control device (1) in accordance with one of the preceding claims,
**characterised in that**
provided in lateral walls (8,7) of the hollow body (8) is at least one bearing point (8.6) in which is mounted the drive shaft (6) or the guide shaft (7).

25. A control device (1) in accordance with claim 24,
**characterised in that**
the at least one bearing point (8.6) is designed in two parts with one part being positioned in the upper part and one in the lower part of the lateral wall (8,7) of the hollow body (8).

26. A control device (1) in accordance with claim 24,
**characterised in that**
the at least one bearing point (8.6) is designed in one part and is positioned entirely in the lateral wall (8,7) of the hollow body (8).

27. A heating or air conditioning system having a control device (1) in accordance with one of the preceding claims 1 to 26.

## Revendications

1. Dispositif de commande (1) servant à réguler des flux d'air dans des véhicules automobiles, se composant d'un cadre comprenant au moins une ouverture de passage (4) et au moins un moyen de commande, conçu comme une jalousie enroulable (5), servant à modifier la section de passage de l'écoulement d'air à travers l'ouverture de passage (4), où le cadre comprend un boîtier (2) comprenant au moins deux corps creux (8) ouverts sur le grand côté, et les corps creux (8) logent l'arbre d'entraînement (6) ou l'arbre de renvoi (7) prévu pour la jalousie enroulable (5), **caractérisé en ce qu'**au moins des parties (8.1) des corps creux (8) sont moulées sur le boîtier (2), et les corps creux (8) présentent respectivement un couvercle pivotant (8.3) servant à ouvrir le corps creux respectif (8), où le couvercle pivotant (8.3) est relié au corps creux (8.1), au moyen d'un élément mobile (8.2).

2. Dispositif de commande (1) selon la revendication 1, **caractérisé en ce que** l'élément mobile (8.2) est conçu comme un film charnière.

3. Dispositif de commande (1) selon l'une ou l'autre des revendications précédentes, **caractérisé en ce que** l'ouverture de passage (4) au moins au nombre de un est disposée entre les deux corps creux (8).

4. Dispositif de commande (1) selon l'une quelconque des revendications précédentes, **caractérisé en ce que** la jalousie enroulable (5) est reliée fixement à l'arbre d'entraînement (6).

5. Dispositif de commande (1) selon la revendication 4, **caractérisé en ce que** l'arbre d'entraînement (6) comprend au moins deux parties (6.1 et 6.2), où la jalousie enroulable (5) est encastrée ou soudée entre ces deux parties (6.1 et 6.2) .

6. Dispositif de commande (1) selon la revendication 5, **caractérisé en ce que** les deux parties (6.1 et 6.2) sont reliées l'une à l'autre au moyen d'un clipsage ou d'un dispositif d'arrêt.

7. Dispositif de commande (1) selon l'une quelconque des revendications précédentes, **caractérisé en ce que** le boîtier (2) est fermé latéralement, à chaque fois par une partie latérale (3).

8. Dispositif de commande (1) selon l'une quelconque des revendications précédentes, **caractérisé en ce que** la jalousie enroulable (5) est conçue comme une bande enroulable sans fin (5) comprenant des ouvertures ou des découpes (5.1) servant à dégager la section de passage (4).

9. Dispositif de commande (1) selon l'une quelconque des revendications précédentes, **caractérisé en ce que** la bande enroulable (5) est guidée, en deux couches, en passant devant l'ouverture de passage (4) au moins au nombre de un, où des ouvertures ou des évidements (5.1) sont réparti (e) s sur la bande enroulable (5), de manière telle que lorsqu'une ouverture de passage (4) est fermée, à chaque fois une couche (5.3, 5.4) de la bande enroulable (5) recouvre à peu près la moitié de l'ouverture de passage (4) où, lorsque l'ouverture de passage (4) s'ouvre, les deux couches (5.3, 5.4) de la bande enroulable (5) se déplacent en sens inverse, et dégagent l'ouverture de passage (4), à partir du milieu vers l'extérieur.

10. Dispositif de commande (1) selon l'une quelconque des revendications précédentes, **caractérisé en ce que** des bords (5.6) d'ouvertures ou de découpes (5.1) de la bande enroulable (5) sont chanfreinés.

11. Dispositif de commande (1) selon l'une quelconque des revendications précédentes, **caractérisé en ce que** l'ouverture de passage (4) au moins au nombre de un est subdivisée en plusieurs fenêtres (4.1), par des barres de grille (4.2).

12. Dispositif de commande (1) selon l'une quelconque des revendications précédentes, **caractérisé en ce que** la section de passage d'une ouverture de passage associée (4) peut être augmentée des deux côtés, en partant du milieu vers l'extérieur, et peut être diminuée des deux côtés, en partant de l'extérieur vers le milieu.

13. Dispositif de commande (1) selon l'une quelconque des revendications précédentes, **caractérisé en ce que** l'arbre d'entraînement (6) est entraîné par un câble Bowden ou par un flexible.

14. Dispositif de commande (1) selon l'une quelconque des revendications précédentes, **caractérisé en ce qu'**un servomoteur servant à régler l'arbre d'entraînement (6) est fixé par brides sur le cadre.

15. Dispositif de commande (1) selon la revendication 14, **caractérisé en ce que** le servomoteur est disposé de façon coaxiale par rapport à l'arbre d'entraînement (6).

16. Dispositif de commande (1) selon la revendication 14 ou 15, **caractérisé en ce que** le servomoteur est intégré à l'arbre d'entraînement (6) conçu comme un arbre creux.

17. Dispositif de commande (1) selon l'une quelconque des revendications précédentes, **caractérisé en ce que** le cadre comprend deux ouvertures de passage (4) où, par modification de la section de passage de l'ouverture de passage respective (4), un flux d'air est à chaque fois modifié.

18. Dispositif de commande (1) selon la revendication 17, **caractérisé en ce que**, dans une première position initiale, une première ouverture de passage (4) est complètement ouverte et une deuxième ouverture de passage (4) est complètement fermée.

19. Dispositif de commande (1) selon la revendication 17 ou 18, **caractérisé en ce que**, dans une deuxième position initiale, la première ouverture de passage (4) est complètement fermée et la deuxième ouverture de passage (4) est complètement ouverte.

20. Dispositif de commande (1) selon l'une quelconque des revendications 17 à 19, **caractérisé en ce que** des sections de passage quelconques pour l'ouverture de passage respective (4) sont réglables entre la première et la deuxième positions initiales.

21. Dispositif de commande (1) selon la revendication 20, **caractérisé en ce que**, lorsque les ouvertures de passage (4) sont de la même dimension, la somme des sections de passage des deux ouvertures de passage (4) est toujours égale à la section de passage, la plus grande possible, d'une ouverture de passage (4).

22. Dispositif de commande (1) selon l'une quelconque des revendications précédentes, **caractérisé en ce que** le cadre, entre deux ouvertures de passage (4), comprend au moins un dispositif support (9).

23. Dispositif de commande (1) selon la revendication 22, **caractérisé en ce que** le dispositif support (9) au moins au nombre de un est relié aux deux parties latérales (3), de préférence de façon amovible.

24. Dispositif de commande (1) selon l'une quelconque des revendications précédentes, **caractérisé en ce qu'**il est prévu au moins un point d'appui (8.6) dans des parois latérales (8.7) du corps creux (8), point d'appui dans lequel est logé l'arbre d'entraînement (6) ou l'arbre de renvoi (7).

25. Dispositif de commande (1) selon la revendication 24, **caractérisé en ce que** le point d'appui (8.6) au moins au nombre de un est conçu en deux parties et, à chaque fois, une partie est disposée dans la partie supérieure et une partie dans la partie inférieure de la paroi latérale (8.7) du corps creux (8).

26. Dispositif de commande (1) selon la revendication 24, **caractérisé en ce que** le point d'appui (8.6) au moins au nombre de un est conçu en une seule partie et disposé complètement dans la paroi latérale (8.7) du corps creux (8).

27. Système de chauffage ou de climatisation comprenant un dispositif de commande (1) selon l'une quelconque des revendications précédentes 1 à 26.
